# EUROPEAN PATENT SPECIFICATION

(11) **EP 2 416 531 B1**
(45) Date of publication and mention of the grant of the patent: **10.07.2013**
(21) Application number: 10171828.6
(22) Date of filing: 04.08.2010
(51) Int. Cl.: H04L 12/911, H04L 29/12

(54) **IPv6 Prefix announcement for routing-based Gateways in shared environments**
IPv6-Präfixankündigung für routingbasierte Gateways in gemeinsam genutzten Umgebungen
Annonce de préfixe IPv6 pour passerelles à routage dans des environnements partagés

(43) Date of publication of application: 08.02.2012
(73) Proprietor: Deutsche Telekom AG, 53113 Bonn (DE)
(72) Inventor: Simon, Holger, 10249 Berlin (DE); Jontofsohn, Walter, 10585 Berlin (DE); Kind, Mario, 10119 Berlin (DE); Bonness, Olaf, 12621 Berlin (DE)
(74) Representative: 2K Patentanwälte Blasberg Kewitz & Reichel

(56) References cited:
- EP-A2- 1 511 249
- TROAN O ET AL: "IPv6 Multihoming without Network Address Translation; draft-troan-multihoming-without-nat66-01.t xt", IPV6 MULTIHOMING WITHOUT NETWORK ADDRESS TRANSLATION; DRAFT-TROAN-MULTIHOMING-WITHOUT-NAT66-01.T XT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 1, 26 July 2010 (2010-07-26), pages 1-19, XP015070239, [retrieved on 2010-07-26]
- JIEYUN (JESSICA) YU COSINE COMMUNICATIONS: "IPv6 Multihoming with Route Aggregation; draft-ietf-ipngwg-ipv6multih ome-with-aggr-01.txt", IETF STANDARD-WORKING-DRAFT, INTERNET ENGINEERING TASK FORCE, IETF, CH, vol. ipngwg, no. 1, 1 August 2000 (2000-08-01), XP015020234, ISSN: 0000-0004
- DEC R JOHNSON CISCO SYSTEMS T MRUGALSKI GDANSK UNIVERSITY OF TECHNOLOGY A MATSUMOTO NTT PF LAB W: "DHCPv6 Route Options; draft-dec-dhcpv6-route-option-04.txt", DHCPV6 ROUTE OPTIONS; DRAFT-DEC-DHCPV6-ROUTE-OPTION-04.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 4, 12 July 2010 (2010-07-12), pages 1-13, XP015069953, [retrieved on 2010-07-12]
- DRAVES D THALER MICROSOFT R: "Default Router Preferences and More-Specific Routes; rfc4191.txt", IETF STANDARD, INTERNET ENGINEERING TASK FORCE, IETF, CH, 1 November 2005 (2005-11-01), XP015054878, ISSN: 0000-0003
- HAGINO RESEARCH LABORATORY J ET AL: "IPv6 Multihoming Support at Site Exit Routers; rfc3178.txt", IETF STANDARD, INTERNET ENGINEERING TASK FORCE, IETF, CH, 1 October 2001 (2001-10-01), XP015008959, ISSN: 0000-0003
- Dunmore M et al: "Evaluation of Multihoming Solutions", 6net , 4 February 2005 (2005-02-04), XP007915758, Retrieved from the Internet: URL:http://www.6net.org/publications/deliv erables/D4.5.3.pdf [retrieved on 2010-11-16]
- NARTEN IBM E NORDMARK SUN MICROSYSTEMS W SIMPSON DAYDREAMER H SOLIMAN ELEVATE TECHNOLOGIES T: "Neighbor Discovery for IP version 6 (IPv6); rfc4861.txt", IETF STANDARD, INTERNET ENGINEERING TASK FORCE, IETF, CH, 1 September 2007 (2007-09-01), XP015052407, ISSN: 0000-0003

## Description

### Field of the invention

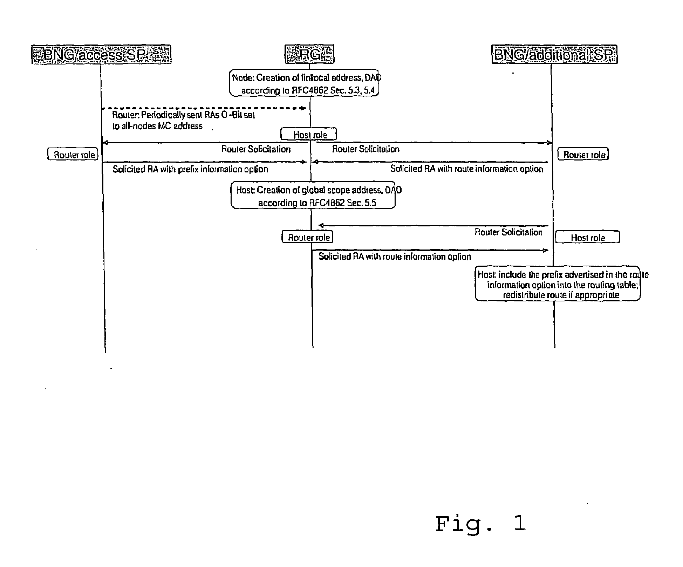

The described invention concerns the IPv6 address / prefix information transfers within communication networks and has been developed in particular for Remote Gateways (RG) that are connected to more than one Broadband Network Gateways (BNG) by multiple physical and/or logical access lines or connections (see Addendum, Figure 1).

It should however be noted that reference to this particular field must not be regarded as limiting the application range of the present invention.

### Background of the invention

TROAN, O. ET AL: "IPv6 Multihoming without Network Address Translation;draft-troan-multihoming-without-nat66-01.txt", IPV6 MULTIHOMING WITHOUT NETWORK ADDRESS TRANSLATION;
DRAFT-TROAN-MULTIHOMING-WITHOUT-NAT66-01.TXT, IETF; STANDARD-WORKING-DRAFT, INTERNET SOCIETY (ISOC) 4, RUE DES FALAISES CH-1205
   and
GENEVA, SWITZERLAND,no. 1, 26 July 2010 (2010-07-26), pages 1-19, XP015070239, [retrieved on 2010-07-26].
JIEYUN (JESSICA) YU: "IPv6 Multihoming with Route Aggregation;
draft-ietf-ipngwg-ipv6multihome-with-aggr-01.txt",
IETF STANDARD-WORKING-DRAFT, IETF, CH,
vol. ipngwg, no. 1, 1 August 2000 (2000-08-01), XP015020234, ISSN: 0000-0004,
describe only scenarios where each ISP delegates its prefix to the Customer (RG), as a result there is no necessity to advertise prefixes to an ISP (BNG).

Operating systems and devices that support the Internet Protocol Version 6 (IPv6) have become widespread, and utilization of IPv6 in customer networks (e.g. Home Network or SOHO) as well as the transport of IPv6 in the Provider networks is necessary.

However, to support IPv6 reachability of devices in the customer network behind a Remote Gateway (RG) with more than one IPv6 uplink connection to one or more different Broadband Network Gateway(s) (BNG) the IPv6 prefix used in the customer network must be signaled from the RG to the connected BNGs that may be operated by Additional Service Providers (see further down for the definition). The background for that is given by the need to install appropriate routing entries inside the BNGs in order to achieve the reachability of the customer network entities from the networks behind the BNGs.

Currently most small and medium-sized customer networks (e.g. home networks or SOHOs) use private IPv4 addresses in their network area. These private IPv4 addresses are then translated (via NAT/NAPT) into the appropriate (public) IPv4 address of the delivering uplink interface of the RG (also named WAN interface). In case of several physical / logical uplink connections to one or more BNGs (of different service providers) this WAN interface addresses have been provided by the corresponding BNG in before. The RG identifies the correct uplink interface for delivering and translates the packet on the basis of routing or policing rules inside the RG into the corresponding IPv4 WAN interface address.

With IPv6 the end-to-end connectivity is achieved by addressing the systems inside the customer network using public IPv6 addresses / IPv6 prefixes and no NAT functionality inside the RG is needed anymore. Each end device in the customer network uses a public IPv6 address that is derived from a public customer network IPv6 prefix which has been provided by the BNG of the access provider (see further down for the definition of the term Access Service Provider) to the RG.

It is supposed that only one public IPv6 prefix will be published by the RG into the customer network, independent of the number of uplink connections of the RG. This IPv6 customer network prefix has been delegated by the corresponding BNG of the Access Service Provider (see further down for the definition of the term Access Service Provider). In case of multiple uplink connections no further IPv6 customer network prefix is requested from any Additional Service Provider. That applies also in the special case of multiple uplink connections to the same (access) service provider. Hence only one of the multiple uplink connections can have the function of the prefix-provisioning uplink.

The IPv6 address/prefix for the customer's home network will be provided from the Access Service Provider, the provider who plays the main role for the customer (this includes in most cases the role of the Internet Service Provider). In the case of an error within the connection to the Access Service Provider any other connection to service providers may be affected.

An Additional Service Provider is any other provider who has a dedicated connection (at least) at OSI layer 2 from his own equipment to the customer.

The scope of this invention is applicable to IPv6 networks that correspond to the aforementioned network scenario.

Routed RGs are considered. The customer network is connected to one or more than one BNGs (of one or more Access /Additional Service Providers) via a single RG with multiple physical / logical uplink (WAN) connections.

In this context it is not of relevance if the RG WAN interface is provisioned with an IPv6 address by the provider (so called "numbered network model") or if only the IPv6 link local address is used which the WAN interface of the RG creates itself (so called "unnumbered network model"). Without restriction of the generality the later description of the embodiment example refers to the numbered network model.

The Layer 2 technology of uplink connections of the RG is not of concern, the invention is applicable to any (wired or wireless) Layer 2 access technology including, but not restricted to Ethernet, FTTH, DSL, 3G, 4G, Wimax or Cable, as it focuses mainly on IPv6 on Open Systems Interconnection (OSI) Layer 3.

Very often more than one physical / logical uplinks connect the RG with the BNGs of the related Service Providers due to several reasons like regulatory regimes, enhanced availability of Internet connectivity or access to specific value-added services (like IP-TV, Voice, Gaming, Power metering etc.).

In the customer network only one global IPv6 prefix has been published in order to ease the communication of end systems in the customer network and relieve them from the difficulties of source address selection.

The RG is only provisioned by the main Access Service Provider with an IPv6 Prefix for the customer network. The Additional Service Providers need to learn this provisioned customer prefix in order to be able to communicate with the end systems in the customer network.

Hence the provisioned customer network IPv6 prefix has to be signalled by the RG to the BNG of the Additional Service Provider allowing them to install appropriate routing entries within their network infrastructure (including their BNGs).

Since the RG is often put at the disposal of the subscriber; it is commonly a low cost device which doesn't support Routing Protocols but only static routing. That's why other solutions have to be defined in order to signal the customer network IPv6 prefix between RG and BNG of Additional Service Providers.

This invention describes such a solution based on the usage of ICMPv6 Router advertisement messages according to RFC 4191.

### Objects and summary of the invention

From the previous description of the requirements for IPv6 RGs with multiple uplink connections one object of the invention is to define a technique which enables IPv6 reachability of end systems in the customer network via any of the connected service providers.

The described invention addresses the problems above and defines a technical solution while using existing standards and protocols and extending their usage.

The solution of the problem is disclosed by the claims.

The invention comprises a method and a system to distribute routing information in an IPv6 network. It comprises of a Remote Gateway (RG) with at least two WAN interfaces establishing at least two IPv6 connections with at least two Broadband Network Gateways (BNG) between a customer network and the Internet. The first RG WAN interface (towards the Access Service Provider) acts as a host by accepting route advertisements (RA) from the first BNG, and wherein the second RG WAN interface acts as router by advertising route advertisements to the second BNG, causing an adoption of a routing behaviour of the second BNG. The IPv6 prefix is assigned from an Access Service Provider over the first interface from the first BNG and the RG delegates the IPv6 prefix to the second BNG, preferably by RA, preferably by including the network prefix of the IPv6 into the route information option into the routing table to the second BNG. The router advertisement is made by Router Advertisement messages with router lifetime set to zero, without a prefix information option but with route information option, according to RFC4191, containing the customer IPv6 network prefix.

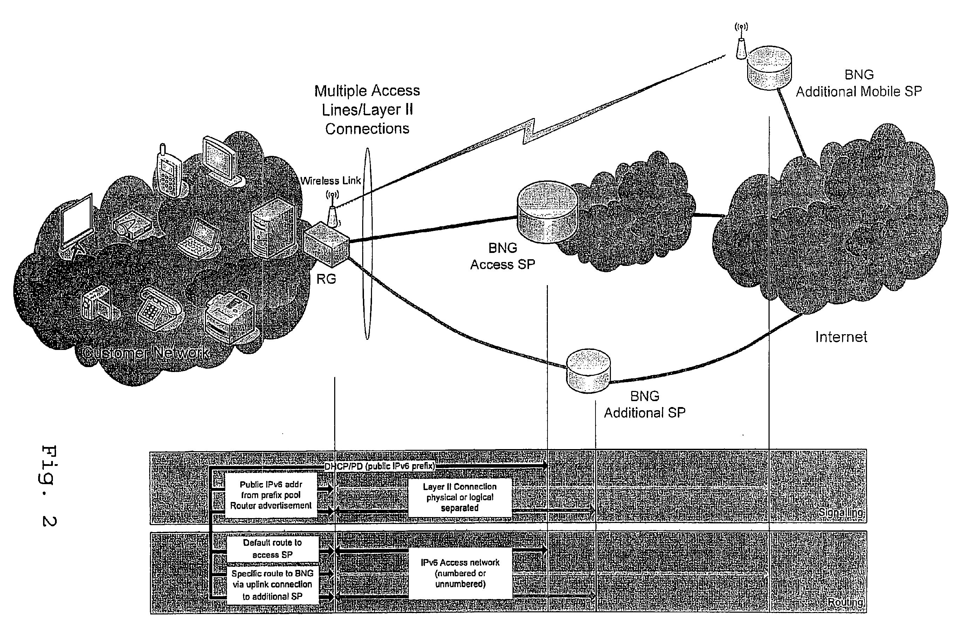

The IPv6 route advertisement functionality ([0044] RFC4861) with the route information option [0042] will be used to signal the IPv6 prefix information from the customer network to the BNG of the Additional Service Providers (which didn't assign the prefix for the customer network) (see addendum figure 2).

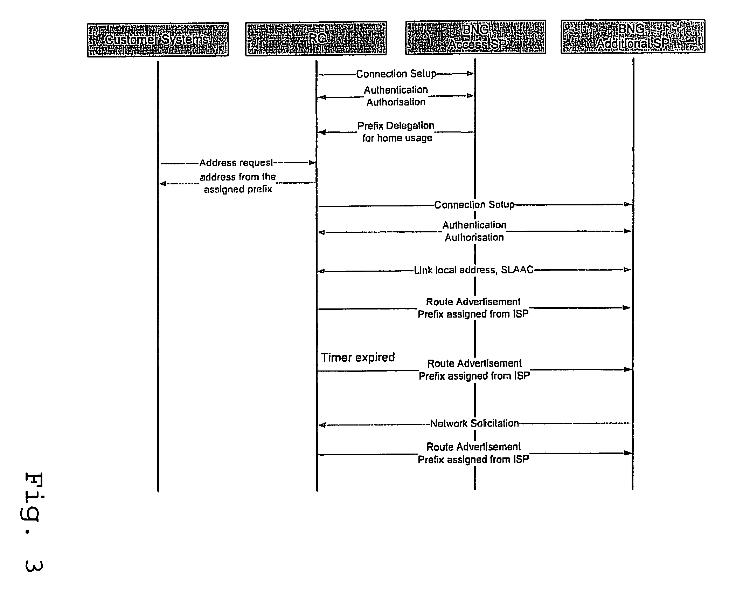

The BNG of the Additional Service Provider will use this information to maintain its routing table in order to reach the systems within the customer network. This assures the reachability of systems in the customer network by the Additional Service Provider which didn't provide the IPv6 prefix for the customer network (see addendum figure 3).

Both, the RG WAN interface and the BNG interface towards the RG have in most cases to fulfil a dual role regarding RFC4861. The BNG interface fulfils the "router" role as it advertises its router information (and sometimes also off-link routes) to the RG and it fulfils the "host" role in accepting and processing router advertisements from the RG containing an off-link route for the IPv6 customer network prefix.

The RG WAN interface acts as a "host" in accepting RA from the BNG signalling off-link and router information and optionally (in case of numbered network model - see above) also on-link information from the BNG and it acts as "router" by advertising the off-link prefix from the customer network to the BNG.

This dual personality regarding IPv6, acting as host and router, on the same interface, is an innovation which isn't covered neither by the standards nor by any known implementation.

In order to meet the very limited capabilities of today's RGs and the complex requirements to BNGs this invention is based on the usage of standardized light-weight ICMPv6 router advertisement messages instead of deploying a full fledged routing protocol.

Several security-related enhancements to this invention may become necessary in order to suppress IPv6 prefix / address spoofing or comparable DoS attacks by the RG. Examples could be rate-limiting of RA from the RG to the BNGs of the Additional Service Providers, coupling of RS/RA exchange with authentication/authorization means, signing and encryption of RS/RA messages etc.

To further improve the security, there can be an additional Business to Business (B2B) interface between the Access Service Provider and the Additional Service Providers in order to verify the customer network assigned IPv6 prefix. For improved performance, this check could be done offline.

Other applicable areas are for instance nested networks. In a customer network scenario, where the customers get assigned an IPv6 prefix with a length shorter than 64 bits, which allows the customer to subnet the prefix to subnetworks. If these networks are connected by a router the described mechanism ('host" and "router" role of dedicated router interfaces coupled to RA with route information options of nested subnetworks) would help to ensure reachability between the devices in the nested network and the outer network.
Another applicable area is the sharing of a common access line between different service providers using a single Remote Gateway to the customer network (e.g. VLAN scenario).

### Figure description

### A short description of the figures is following

Fig. 1 shows a message flow between RG und BNGs
Fig. 2 shows a network overview, with one RG and several BNGs
Fig. 3 shows a message sequence between RG und BNGs

### Detailed description of an embodiment example of the invention

The example refers to the numbered network model, where a global scope IPv6 address is assigned to the RG WAN interface. This is a feasible assumption if the RG should fulfil additional functions as recursive DNS service.

The Access Service Provider assigns a global scope IPv6 prefix for the customer network of the RG (see Fig. 1, 2 and 3). The RG most commonly will advertise this prefix to the customer network and/or assign addresses from this prefix to systems in the customer network (Fig. 2). The processes in the customer network are not topic of this invention. The technique how this is achieved is not discussed here, even if it would fit in the communication process described hereafter.

The systems in the customer network will have assigned a global scope IPv6 address which enables them to be directly addressable from a service provider, given that the service provider has a corresponding route to the customer network (Fig. 2).

The RG creates its link-local address and performs Duplicate Address Detection (DAD) according to RFC4862 sect. 5.3 and 5.4 (node role). The RG should be able to process Default Route Preferences (RFC4191 sect. 2.2)

The RG sends Router Solicitation messages defined in RFC4861 Sect. 4.1 to the all-routers MC address on all interfaces (Fig. 1 and Fig. 3).

The BNG of the Access Service Provider responds with a Router Advertisement (RA) message (RFC4861 Sec. 4.2) containing a router lifetime greater zero indicating that the router (BNG) is willing to act as default router (Fig. 1 and Fig. 3).

The BNG of the Access Service Provider should set the Default Router Preference to high (RFC4191 Sec. 2.1), in case a BNG of one of the additional ISPs sends unintentionally RA with a router lifetime greater zero. The RA includes a prefix information option (RFC4861 sect. 4.6.2) with the used on-link prefix for the uplink connection between RG and BNG and the A- and L-Bits set. This uplink IPv66 prefix is used by the RG WAN interface in order to create a global scope IPv6 WAN address directing to the Access Service Provider.

The BNGs of additional SPs respond with RA messages containing only a route information option (RFC4191 sect. 2.3) in order to allow the RG to route traffic to the connected Service Provider using the more specific route obtained by this route information option. No on-link prefix is provided for the uplink between the RG and the BNG of additional SP.

Until now, the RG WAN interface acted only in "host" role, the BNGs interface in "router" role.

The Additional Service Provider's BNG interfaces towards the RG act in the "host" role and send Router Solicitation messages.

The RG WAN interface acts by receiving these RSs in "router" role and sends solicited Router Advertisement messages to the BNG of the Additional Service Provider with router lifetime set to zero, without a prefix information option but with a route information option (according to RFC4191) containg the customer IPv6 network prefix. (Fig. 1 and Fig. 3)

The Additional Service Provider's BNG processes the RA and evaluates the received route information option announced from the RG. This route information option is used to generate a routing table entry for the customer IPv6 network inside the BNG, so that the end systems inside the customer network can be reached by the Additional Service Provider using this more specific IPv6 route. Hence a transparent End-to-end connectivity can be guaranteed for the IPv6 end systems of the customer.

### Abbreviations

- B2B: Business-to-Business
- BNG: Broadband Network Gateway
- DAD: Duplicate Address Detection
- IPv4: Internet Protocol Version 4
- IPv6: Internet Protocol Version 6
- ISP: Internet Service Provider
- OSI: Open Systems Interconnection
- MC: Multicast
- NAT: Network Address Translation
- RA: Router Advertisement
- RFC: Request For Comments
- RG: Remote Gateway
- RS: Router Solicitation
- SP: Service Provider
- WAN: Wide Area Network

### Literature

RFC 1918: Y. Rekhter et al. : Address Allocation for Private Internets
RFC4191: Draves, R., Thaler, D.: Default Router Preferences and more-Specific Routes. November 2005
RFC4861: Narten, T. et al.: Neighbor Discovery for IP version 6 (IPv6). September 2007
RFC4862: Thomson, S., Narten, T., Jinmei, T.: IPv6 Stateless Address Autoconfiguration. September 2007

## Claims

1. Method to distribute routing information in an IPv6 network, comprising a Remote Gateway ,RG, with more than one logical and/or physical WAN interfaces establishing at least two IPv6 connections with one or more Broadband Network Gateways ,BNG, between a customer network and the Internet, wherein the RG acts as a host on its first WAN interface by accepting router advertisements ,RA, from the first BNG, **characterised in that** the RG acts as a router on its other WAN interfaces by advertising router advertisements to the connected BNGs, causing an adoption of the routing and forwarding behavior of these connected BNGs, and **in that** the router advertisement is made by Router Advertisement messages with router lifetime set to zero, without a prefix information option but with route information option, according to RFC4191, containing the customer IPv6 network prefix.

2. The method according to the previous claim, wherein the RA comprises IPv6 prefix information.

3. The method according to the previous claim, wherein the IPv6 prefix is assigned to the RG from an Internet Service Provider / Access Service Provider over the first interface from the first BNG and the RG propagates this delegated IPv6 prefix to the other connected BNGs, by upstream RAs to the other uplink connections, by including this delegated IPv6 network prefix into the route information option, RIO, of the RAs in order to trigger the connected BNGs to add this IPv6 prefix to their routing tables.

4. The method according to one or more of the previous claims, wherein the RAs are light-weight ICMPv6 router advertisement messages.

5. The method according to one or more of the previous claims, wherein the RAs are exchanged with authentication/authorization means, for example signing and encryption of RS/RA messages.

6. The method according to one or more of the previous claims, wherein an Out-of-band interface between the BNGs is used, in order to verify the customer network assigned IPv6 prefix that has been announced by the RG via upstream RA messages.

7. The method according to one or more of the previous claims, wherein the RG sends Router Solicitation messages to all-routers MC address on all interfaces.

8. The method according to the preceding claims, wherein the first BNG responds with a Router Advertisement, RA, message and wherein the other BNGs respond with RA messages containing only a route information option in order to allow the RG to route traffic to the correct BNG.

9. The method according the previous claims, wherein other BNGs process the RAs received from the RG and evaluate the received route information option announced from the RG, and the route information option is used to generate a routing table entry for the customer IPv6 network inside the BNG.

10. System to distribute routing information in an IPv6 network, comprising a Remote Gateway ,RG, with more than one logical and /or physical WAN interfaces establishing at least two IPv6 connections with one or more Broadband Network Gateways, BNG, between a customer network and the Internet, wherein the RG is adapted to act as a host on its first WAN interface by accepting route advertisements , RA, from the first BNG,
**characterised in that** the RG adapted to act as router on its other WAN interfaces by advertising route advertisements to the connected BNGs, causing an adoption of the routing behavior of these connected BNGs,
and **in that** the router advertisement is made by Router Advertisement messages with router lifetime set to zero, without a prefix information option but with route information option, according to RFC4191, containing the customer IPv6 network prefix.

11. The System according to the previous system claim,
wherein the RA comprise IPv6 prefix information.

12. The System according to the previous system claim, comprising means to assign the IPv6 prefix to the RG from an Internet Service Provider, ISP, Access Service Provider over the first interface from the first BNG and the RG is adapted to propagate this delegated IPv6 prefix to the other connected BNGs, by upstream RAs to the other uplink connections, by including this delegated IPv6 network prefix into the route information option, RIO, of the RAs in order to trigger the connected BNGs to add this IPv6 prefix to their routing tables.

13. The System according to one or more of the previous system claims, wherein the RA are light-weight ICMPv6 router advertisement messages.

14. The System according to one or more of the previous system claims, comprising means to exchange the RA with authentication/authorization means, for example signing and encryption of RS/RA messages.

15. The System according to one or more of the previous system claims, wherein an Out-of-band interface between the BNGs is provided, in order to verify the customer network assigned IPv6 prefix that has been announced by the RG via upstream RA messages.

16. The System according to one or more of the previous system claims, comprising means that the RG sends Router Solicitation messages to the all-routers MC address on all interfaces.

17. The System according to the preceding system claim, comprising means that the first BNG responds with a Router Advertisement, RA, message and wherein the other BNGs respond with RA messages containing only a route information option in order to allow the RG to route traffic to the correct BNG.

18. The System according the preceding system claim, comprising means allowing that the other BNGs process the RAs received from the RG and evaluate the received route information option announced from the RG, and the route information option is used to generate a routing table entry for the customer IPv6 network inside the BNG.

## Patentansprüche

1. Ein Verfahren zum Verteilen von Routing-informationen in einem IPv6-Netzwerk, umfassend ein Remote Gateway, RG, mit mehr als einem logischen und / oder technischen WAN Interfaces, das mindestens zwei IPv6-Verbindungen mit einem oder mehreren Broadband Network Gateways , BNG, zwischen einem Kundennetzwerk und dem Internet aufbaut, wobei das RG als Host bei seinen ersten WAN-Interface agiert durch das Annehmen von Router-Advertisements, RA, von der ersten BNG **dadurch gekennzeichnet, dass** der RG als Router auf seinen anderen WAN interfaces agiert durch das Anbieten von Router-Advertisements an die angeschlossenen BNG, wodurch eine Anpassung des Routing und Welterleitungs-Verhalten dieser verbundenen BNG eingeleitet wird,
und dass das Router Advertisement aus Router Advertisment Nachrichten besteht, deren Router- Lebensdauer auf null gesetzt ist, ohne eine Präfix-Informations-Option aber mit Route Informations-Option nach RFC4191, die den Kunden IPv6 Netzwerk- Präfix enthält.

2. Ein Verfahren nach dem vorangehenden Anspruch, wobei das RA IPv6 Präfix-Informationen umfasst.

3. Ein Verfahren nach dem vorangehenden Anspruch, wobei der IPv6 Präfix dem RG von einem Internet-Service-Provider/ Access Service Provider über das erste Interface vom ersten BNG zugeordnet wird und der RG den zugeordneten IPv6 Präfix an die anderen verbundenen BNGs verbreitet, durch Upstream der RAs zu den anderen Uplink-Verbindungen, durch das Einbeziehen des zugeordneten IPv6 Netzwerk-Präfix in die Route-Information-Option, RIO, der RAs, um die verbundenen BNGs anzuweisen den IPv6 Präfix in ihre Routing-Tables hinzuzufügen.

4. Ein Verfahren nach einem oder mehreren der vorangegangenen Ansprüche, wobei die RAs leichtgewichtige ICMPv6 Router-Advertisement Messages sind.

5. Ein Verfahren nach einem oder mehreren der vorangegangenen Ansprüchen, wobei die RAs durch Authentication/Authorization Mittel ausgetauscht werden, zum Beispiel durch das Signieren und Entschlüsseln von RS/RA Nachrichten.

6. Ein Verfahren nach einem oder mehreren der vorangegangenen Ansprüchen, wobei ein Out-of-Band Interface zwischen den BNGs benutzt wird, um die dem Kundennetzwerk zugeordneten IPv6 Präfix zu verifizieren, der von dem RG durch die vorgeschaltete RA-Nachricht bekanntgegeben wurde.

7. Ein Verfahren nach einem oder mehreren der vorangegangenen Ansprüche, wobei der RG Router-Sollcitation-Messages an alle Router MC Adressen auf allen Interfaces schickt.

8. Ein Verfahren nach einem oder mehreren der vorangegangenen Ansprüche, wobei der erste BNG mit einer Router-Advertisement, RA, Nachricht antwortet und wobei die anderen BNGs mit RA Nachrichten antworten, die nur eine Router-Informations-Option enthält, um es dem RG zu ermöglichen,den Datenverkehr zu dem korrekten BNG zu leiten.

9. Ein Verfahren nach einem oder mehreren der vorangegangenen Ansprüchen, wobei andere BNGs die RAs verarbeiten, die von den RG empfangen wurden und bewertet die empfangenen Route-information-Option, die von dem RG ausgegeben wurde, und die Route-information-Option wird genutzt, um ein Routlng-Table-Entry für das Kunden IPv6 Netzwerk innerhalb des BNG zu erstellen.

10. Das System zum Verteilen von Routing-informationen in einem IPv6-Netzwerk, umfassend ein Remote Gateway, RG, mit mehr als einem logischen und / oder physischen WAN Interfaces, das mindestens zwei IPv6-Verbindungen mit einer oder mehreren Broadband Network Gateways , BNG, zwischen einem Kunden und dem Network Gateway aufbaut, wobei das RG angepasst ist um als Host an seinem ersten WAN-Interface zu agieren, durch das Annehmen von Router-Advertisements, RA, von dem ersten BNG **dadurch gekennzeichnet, dass** der RG ausgebildet ist, um als Router auf seinen anderen WAN interfaces zu agieren durch das Verbreiten von Router-Advertisements an die angeschlossenen BNG, wodurch eine Annahme des Routing Verhalten dieser verbundenen BNG erreicht wird,
und dass das Router Advertisement aus Router Advertisment Nachrichten entsteht, und die Router- Lebensdauer ist auf null gesetzt ist, ohne eine Präfix-Informations-Option aber mit Route Informations-Option nach RFC4191, die den Kunden IPv6 Netzwerk- Präfix enthält.

11. Das System nach dem vorangehenden Anspruch, wobei das RA IPv6 Präfix-Informationen umfasst.

12. Das System nach dem vorangehenden System Anspruch, umfassend Mittel um den IPv6 Präfix dem RG von einem Internet-Service-Provider/ Access Service Provider über das erste Interface vom ersten BNG zuzuordnen und der RG den zugeordneten IPv6 Präfix an die anderen verbundenen BNGs verbreitet, durch Upstream der RAs zu den anderen Uplink-Verbindungen, durch das Einbeziehen des zugeordneten IPv6 Netzwerk-Präfix in die Route-Information-Option, RIO, der RAs, um die verbundenen BNGs anzuweisen den IPv6 Präfix in ihre Routing-Tables hinzuzufügen.

13. Das System nach einem oder mehreren der vorangegangenen System Ansprüchen, wobei die RAs leichtgewichtige ICMPv6 Router-Advertisement Messages sind.

14. Das System nach einem oder mehreren der vorangegangenen System Ansprüchen, umfassend Mittel, dass die RAs durch Authentication/Authorization ausgetauscht werden, zum Beispiel durch das Siginieren und Entschlüsseln von RS/RA Nachrichten.

15. Das System nach einem oder mehreren der vorangegangenen System Ansprüchen, wobei ein Out-of-Band Interface zwischen den BNGs benutzt wird, um die dem Kundennetzwerk zugeordneten IPv6 Präfix zu verifizieren, der von dem RG durch die vorgeschaltete RA-Nachricht bekanntgegeben wurde.

16. Das System nach einem oder mehreren der vorangegangenen System Ansprüchen, umfassend Mittel, dass der RG Router-Solicitation-Messages an alle Router MC Adressen auf allen Interfaces schickt.

17. Das System nach einem oder mehreren der vorangegangenen System Ansprüchen, umfassend Mittel, dass der ersten BNG mit einer Router-Advertisement, RA, Nachricht antwortet und wobei die anderen BNGs mit RA Nachrichten antworten, die nur eine Router-Informations-Option enthält, um es dem RG zu ermöglichen, den Datenverkehr zu dem korrekten BNG zu leiten.

18. Das System nach einem oder mehreren der vorangegangenen Ansprüchen, umfassend Mittel, die es ermögliche, dass andere BNG die RAs verarbeiten, die von den RG empfangen wurden und die die empfangenen Route-Information-Option, die von dem RG ausgegeben wurde, bewerten, und die Route-Information-Option wird genutzt, um ein Routing-Table-Entry für das Kunden IPv6 Netzwerk Innerhalb des BNG zu erstellen.

## Revendications

1. Procédé pour distribuer des informations de routage dans un réseau IPv6, comprenant une passerelle à distance, RG, ayant, plus d'une interface de réseau étendu (WAN) logique et/ou physique établissant au moins deux connexions IPv6 avec une ou plusieurs passerelles de réseau à large bande, BNG, entre un réseau de client et Internet, la RG agissant en tant qu'hôte sur sa première interface WAN par acceptation d'annonces de routeur, RA, en provenance de la première BNG, **caractérisé par le fait que** la RG agit en tant que routeur sur ses autres interfaces WAN par annonce d'annonces de routeur aux BNG connectées, entraînant une adoption du comportement de routage et de transfert de ces BNG connectées, et **par le fait que** l'annonce de routeur est réalisée par des messages d'annonce de routeur avec une durée de vie de routeur réglée à zéro, sans option d'informations de préfixe mais avec une option d'informations de route, selon RFC4191, contenant le préfixe de réseau IPv6 de client.

2. Procédé selon la revendication précédente, dans lequel la RA comprend des informations de préfixe IPv6.

3. Procédé selon la revendication préaédente, dans lequel le préfixe IPv6 est affecté à la RG à partir d'un fournisseur de services Internet/fournisseur de services d'accès sur la première interface à partir de la première BNG et la RG propage ce préfixe IPv6 délégué vers les autres BNG connectées, par des RA en voie montante aux autres connexions de liaison montante, par inclusion de ce préfixe de réseau IPv6 délégué dans l'option d'informations de route, RIO, des RA de façon à amener les BNG connectées à ajouter ce préfixe IPv6 à leurs tables de routage.

4. Procédé selon l'une ou plusieurs des revendications précédentes, dans lequel les RA sont des messages d'annonce de routeur ICMPv6 léger.

5. Procédé selon l'une ou plusieurs des revendications précédentes, dans lequel les RA sont échangées avec un moyen d'authentification/autorisation, par exemple, la signature et le chiffrement de messages de RS/RA.

6. Procédé selon l'une ou plusieurs des revendications précédentes, dans lequel une interface hors bande entre les BNG est utilisée, de façon à vérifier le préfixe IPv6 affecté par réseau de client qui a été annoncé par la RG par l'intermédiaire de messages de RA en voie montante.

7. Procédé selon l'une ou plusieurs des revendications précédentes, dans lequel la RG envoie des messages de sollicitation de routeur à une adresse MC tous routeurs sur toutes les interfaces.

8. Procédé selon les revendications précédentes, dans lequel la première BNG répond avec un message d'annonce de routeur, RA, et dans lequel les autres BNG répondent avec des messages de RA contenant uniquement une option d'informations de route de façon à permettre à la RG de router un trafic vers la BNG correcte.

9. Procédé selon les revendications précédentes, dans lequel d'autres BNG traitent les RA reçues à partir de la RG et évaluent l'option d'informations de route reçue annoncée à partir de la RG, et l'option d'informations de route est utilisée pour générer une entrée de table de routage pour le réseau IPv6 de client à l'intérieur de la BNG.

10. Système pour distribuer des informations de routage dans un réseau IPv6, comprenant une passe.relle à distance, RG, ayant plus d'une interface de réseau étendu (WAN) logique et/ou physique établissant au moins deux connexions IPv6 avec une ou plusieurs passerelles de réseau à large bande, BNG, entre un réseau de client et Intexnet, la RG étant adaptée pour agir en tant qu'hôte sur sa première interface WAN par acceptation d'annonces de route, RA, en provenance de la première BNG, **caractérisé par le fait que** la RG est adaptée pour agir en tant que routeur sur ses autres interfaces WAN par annonce d'annonces de route aux BNG connectées, entraînant une adoption du comportement de routage de ces BNG connectées, et **par le fait que** l'annonce de routeur est réalisée par des messages d'annonce de routeur avec une durée de vie de routeur réglée à zéro, sans option d'informations de préfixe mais avec une option d'informations de route, selon RFC4191, contenant le préfixe de réseau IPv6 de client.

11. Système selon la revendication de système précédente, dans lequel la RA comprend des informations de préfixe IPv6.

12. Système selon la revendication de système précédente, comprenant un moyen pour affecter le préfixe IPv6 à la RG à partir d'un fournisseur de services Internet, ISP/fournisseur de services d'accès sur la première interface à partir de la première BNG et la RG est adaptée pour propager ce préfixe IPv6 délégué vers les autres BNG connectées, par des RA en voie montante aux autres connexions de liaison montante, par inclusion de ce préfixe de réseau IPv6 délégué dans l'option d'informations de route, RIO, des RA de façon à amener les BNG connectées à ajouter ce préfixe IPv6 à leurs tables de routage.

13. Système selon l'une ou plusieurs des revendications de système précédentes, dans lequel les RA sont des messages d'annonce de routeur ICMPv6 léger.

14. Système selon l'une ou plusieurs des revendications de système précédentes, comprenant un moyen pour échanger la RA avec un moyen d'authentification/autorisation, par exemple la signature et le chiffrement de messages de RS/RA.

15. Système selon l'une ou plusieurs des revendications de système précédentes, dans lequel une interface hors bande entre les BNG est prévue, de façon à vérifier le préfixe IPv6 affecté par réseau de client qui a été annoncé par la RG par l'intermédiaire de messages de RA en voie montante.

16. Système selon l'une ou plusieurs des revendications de système précédentes, comprenant un moyen par l'intermédiaire duquel la RG envoie des messages de sollicitation de routeur à l'adresse MC tous routeurs sur toutes les interfaces.

17. Système selon la revendication de système précédente, comprenant un moyen par l'intermédiaire duquel la première BNG répond avec un message d'annonce de routeur, RA, et dans lequel les autres BNG répondent avec des messages de RA contenant uniquement une option d'informations de route de façon à permettre à la RG de router un trafic vers la BNG correct.

18. Système selon la revendication de système précédente, comprenant un moyen permettant que les autres BNG traitent les RA reçues à partir de la RG et évaluent l'option d'informations de route reçue annoncée à partir de la RG, et l'option d'informations de route est utilisée pour générer une entrée de table de routage pour le réseau IPv6 de client à l'intérieur de la BNG.
